(19) **Europäisches Patentamt / European Patent Office / Office européen des brevets**

(11) **EP 3 316 494 A1**

(12) **EUROPEAN PATENT APPLICATION**
published in accordance with Art. 153(4) EPC

(43) Date of publication:
**02.05.2018 Bulletin 2018/18**

(51) Int Cl.:
***H04B 7/04*** (2017.01)

(21) Application number: **15902493.4**

(22) Date of filing: **28.08.2015**

(86) International application number:
**PCT/CN2015/088326**

(87) International publication number:
**WO 2017/035686 (09.03.2017 Gazette 2017/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Huawei Technologies Co., Ltd.**
**Longgang District**
**Shenzhen, Guangdong 518129 (CN)**

(72) Inventors:
• **ZHANG, Peng**
 **Shenzhen**
 **Guangdong 518129 (CN)**
• **ZHAO, Yueying**
 **Shenzhen**
 **Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(54) **INFORMATION TRANSMISSION METHOD, APPARATUS AND DEVICE**

(57)    The present invention relates to the field of wireless communications technologies, and in particular, to an information transmission method, apparatus, and device, so as to resolve a problem that because UE cannot correctly demodulate a MIMO signal, the UE can neither correctly receive a signal from a serving cell nor effectively cancel or suppress interference caused by a signal from a neighboring cell. The information transmission method provided in embodiments of the present invention includes: determining, by a network-side device, virtual antenna mapping (VAM) matrix information of at least one cell sending a multiple-input multiple-output (MIMO) signal, and informing user equipment (UE) of the VAM matrix information of the at least one cell. According to the embodiments of the present invention, UE may correctly demodulate a MIMO signal received from a serving cell, and may further cancel or suppress interference from a neighboring cell by demodulating a MIMO signal from the neighboring cell.

S901
An RNC determines VAM matrix information of at least one cell sending a MIMO signal

S902
The RNC informs UE of the VAM matrix information of the at least one cell by using RRC signaling

S903
The UE demodulates, based on VAM matrix information of any cell, a MIMO signal received from the cell

FIG. 9

## Description

## TECHNICAL FIELD

The present invention relates to the field of wireless communications technologies, and in particular, to an information transmission method, apparatus, and device.

## BACKGROUND

In a wideband code division multiple access (Wideband Code Division Multiple Access, WCDMA) system, to increase a data transmission rate of user equipment (User Equipment, UE) and increase a signal to interference plus noise ratio of a signal received by cell-edge UE, a cell may configure a downlink multiple-input multiple-output (Multiple Input Multiple Output, MIMO) transmission manner for the UE.

When the UE is located in a serving cell, if the serving cell transmits a MIMO signal, the UE needs to know precoding information (PCI, Pre-Coding Information) used by the cell to correctly demodulate the MIMO signal.

When the UE is in an edge area between a serving cell and a neighboring cell, the UE may receive an interference signal from the neighboring cell. To improve quality of a signal received from the serving cell, the UE may process interference from the neighboring cell. Processing manners include interference cancellation, interference suppression, and the like. For the MIMO interference signal, the UE needs to know PCI used by the MIMO interference signal, so as to perform an operation of interference cancellation or interference suppression. If the UE does not know the PCI used by the MIMO interference signal, the UE cannot correctly model the MIMO interference signal, and consequently an effect of performing interference cancellation or interference suppression is poor.

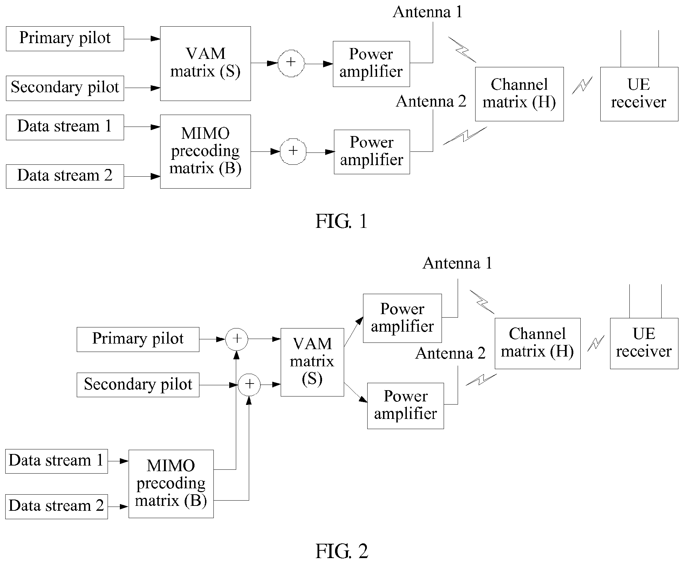

When a cell sends a pilot signal used for channel estimation, the cell needs to precode the pilot signal based on a virtual antenna mapping (Virtual Antenna Mapping, VAM) matrix. As shown in FIG. 1, assuming that a primary pilot signal is P0, a secondary pilot signal is P1, a data stream 1 signal is x1, a data stream 2 signal is x2, a VAM matrix is S, a matrix for precoding the data stream signals is B, where B is any matrix in a known precoding matrix group, and a channel matrix is H, received signals $y_1$ and $y_2$ that are on a UE side and that correspond to the primary pilot signal $P_0$ and the secondary pilot signal $P_1$ in FIG. 2 may be expressed as:

$$\begin{bmatrix} y_1 \\ y_2 \end{bmatrix} = HS \begin{bmatrix} P_0 \\ P_1 \end{bmatrix} \quad (1)$$

It can be learned that the UE may obtain HS based on the known received signals $y_1$ and $y_2$ and the known transmitted pilot signals $P_0$ and $P_1$.

Received signals z1 and z2 that are on the UE side and that correspond to the data stream signals $x_1$ and $x_2$ in FIG. 2 may be expressed as:

$$\begin{bmatrix} z_1 \\ z_2 \end{bmatrix} = HB \begin{bmatrix} x_1 \\ x_2 \end{bmatrix} \quad (2)$$

$$\begin{bmatrix} z_1 \\ z_2 \end{bmatrix} = HBx_1 \quad (3)$$

Formula (2) corresponds to two transmitted data stream signals, and formula (3) corresponds to one transmitted data stream signal. It can be learned that the UE needs to know H to correctly demodulate x1 and x2. However, according to the received pilot signals, the UE can only estimate HS. Apparently, the UE cannot correctly demodulate the data signals.

As shown in FIG. 2, FIG. 2 shows another MIMO transmission manner. In this transmission manner, pilot signals are transmitted in the transmission manner shown in formula (1). Data signals are respectively precoded by using $S^{-1}B$ and HS that can be estimated based on the pilot signals, as shown in the following formulas:

$$\begin{bmatrix} z_1 \\ z_2 \end{bmatrix} = HSS^{-1}B \begin{bmatrix} x_1 \\ x_2 \end{bmatrix} \quad (4)$$

$$\begin{bmatrix} z_1 \\ z_2 \end{bmatrix} = HSS^{-1}Bx_1 \quad (5)$$

Formula (4) corresponds to two transmitted data stream signals, and formula (5) corresponds to one transmitted data stream signal. It can be learned that to correctly demodulate x1 and x2, the UE not only needs to estimate HS based on the pilot signals, but also needs to know S-1B. The UE cannot correctly demodulate the data signals if the UE does not know S-1B.

In conclusion, in the MIMO transmission manner of WCDMA, UE cannot correctly demodulate a data signal. Consequently, the UE can neither correctly receive a signal from a serving cell nor effectively cancel or suppress interference caused by a signal from a neighboring cell.

Embodiments of the present invention provide an information transmission method, apparatus, and device, so as to resolve a problem that because UE cannot correctly demodulate a MIMO signal, the UE can neither correctly receive a signal from a serving cell nor effectively cancel or suppress interference caused by a signal from a neighboring cell.

According to a first aspect, an information transmission apparatus is provided, including:

a determining module, configured to: determine virtual antenna mapping (VAM) matrix information of at least one cell sending a multiple-input multiple-output (MIMO) signal, and transmit the determined VAM matrix information of the at least one cell to a sending module; and
the sending module, configured to inform user equipment (UE) of the VAM matrix information that is of the at least one cell and that is determined by the determining module.

With reference to the first aspect, in a first possible implementation, if the apparatus is in a radio network controller (RNC), the determining module is specifically configured to determine VAM matrix information of a cell covered by at least one base station that is managed by the RNC, and/or determine VAM matrix information of a cell covered by at least one base station that is managed by another RNC.

With reference to the first possible implementation of the first aspect, in a second possible implementation, the determining module is specifically configured to determine the VAM matrix information of the cell covered by the at least one base station that is managed by the RNC according to the following step: receiving the VAM matrix information that is of the cell and that is respectively sent from the at least one base station; or respectively configuring the VAM matrix information for the cell covered by the at least one base station that is managed by the RNC.

With reference to the second possible implementation of the first aspect, in a third possible implementation, the sending module is further configured to after the determining module respectively configures the VAM matrix information for the cell covered by the at least one base station that is managed by the RNC, send the VAM matrix information configured for each cell to a base station to which the cell belongs.

With reference to the first possible implementation of the first aspect, in a fourth possible implementation, the determining module is specifically configured to determine the VAM matrix information of the cell covered by the at least one base station that is managed by the another RNC according to the following step: receiving the VAM matrix information that is of the cell and that is sent from the another RNC.

With reference to any one of the first aspect, or the first to the fourth possible implementations of the first aspect, in a fifth possible implementation, if the apparatus is in a radio network controller (RNC), the sending module is specifically configured to inform the UE of the VAM matrix information of the at least one cell by using radio resource control (RRC) signaling.

With reference to the first aspect, in a sixth possible implementation, if the apparatus is in a base station, the determining module is specifically configured to: obtain the VAM matrix information that is of the at least one cell and that is configured by a radio network controller (RNC); or configure VAM matrix information for at least one cell covered by the base station, and obtain VAM matrix information that is of at least one cell and that is configured by another base station.

With reference to the first aspect, or the sixth possible implementation of the first aspect, in a seventh possible implementation, if the apparatus is in a base station, the sending module is specifically configured to inform the user equipment (UE) of the VAM matrix information of the at least one cell by using physical layer signaling, where the physical layer signaling includes broadcast signaling or dedicated control signaling.

With reference to the seventh possible implementation of the first aspect, in an eighth possible implementation, if the base station is a serving base station, the at least one cell includes a serving cell and a neighboring cell of the UE; or if the base station is a neighboring base station, the at least one cell includes at least one cell covered by the neighboring base station.

With reference to any one of the first aspect, or the first to the eighth possible implementations of the first aspect, in a ninth possible implementation, the VAM matrix information of each cell includes: information for indicating a VAM matrix used by the cell; or information for indicating a precoding codebook group used by the cell, where the precoding codebook group is a codebook set generated based on a VAM matrix and a precoding matrix set that can be used, and is used to demodulate a MIMO signal.

With reference to the ninth possible implementation of the first aspect, in a tenth possible implementation, the information for indicating a VAM matrix used by the cell includes one or more of the following information: identification information for indicating the VAM matrix; identification information for indicating a phase used by the VAM matrix; or identification information of the cell.

With reference to the ninth possible implementation of the first aspect, in an eleventh possible implementation, the information for indicating a precoding codebook group used by the cell includes one or more of the following information: identification information of the precoding codebook group; information about the VAM matrix used to generate the precoding codebook group; or identification information of the cell.

According to a second aspect, an information transmission apparatus is provided, including:

a receiving module, configured to: receive virtual antenna mapping (VAM) matrix information that is of at least one cell and that is sent from a network-side device, and transmit the received VAM matrix information of the at least one cell to a demodulation module; and

the demodulation module, configured to demodulate, based on VAM matrix information of any one of the at least one cell, a multiple-input multiple-output (MIMO) signal received from the cell.

With reference to the second aspect, in a first possible implementation, if the apparatus is in a radio network controller (RNC), the receiving module is specifically configured to receive the VAM matrix information that is of the at least one cell and that is sent from the RNC by using radio resource control (RRC) signaling.

With reference to the second aspect, in a second possible implementation, if the apparatus is in a base station, the receiving module is specifically configured to receive the VAM matrix information that is of the at least one cell and that is sent from the base station by using physical layer signaling, where the physical layer signaling includes broadcast signaling or dedicated control signaling.

With reference to the second possible implementation of the second aspect, in a third possible implementation, if the base station is a serving base station, the at least one cell includes a serving cell and a neighboring cell of the UE; or if the base station is a neighboring base station, the at least one cell includes at least one cell covered by the neighboring base station.

With reference to the second aspect, or the second or the third possible implementation of the second aspect, in a fourth possible implementation, the VAM matrix information of each cell includes: information for indicating a VAM matrix used by the cell; or information for indicating a precoding codebook group used by the cell, where the precoding codebook group is a codebook set generated based on a VAM matrix and a precoding matrix set that can be used, and is used to demodulate a MIMO signal.

With reference to the fourth possible implementation of the second aspect, in a fifth possible implementation, the information for indicating a VAM matrix used by the cell includes one or more of the following information: identification information for indicating the VAM matrix; identification information for indicating a phase used by the VAM matrix; or identification information of the cell.

With reference to the fourth possible implementation of the second aspect, in a sixth possible implementation, the information for indicating a precoding codebook group used by the cell includes one or more of the following information: identification information of the precoding codebook group; information about the VAM matrix used to generate the precoding codebook group; or identification information of the cell.

According to a third aspect, an information transmission device is provided, including:

a processor, configured to: determine virtual antenna mapping (VAM) matrix information of at least one cell sending a multiple-input multiple-output (MIMO) signal, and transmit the determined VAM matrix information of the at least one cell to a transmitter; and the transmitter, configured to inform user equipment (UE) of the VAM matrix information that is of the at least one cell and that is determined by the processor.

With reference to the third aspect, in a first possible implementation, if the device is a radio network controller (RNC), the processor is specifically configured to determine VAM matrix information of a cell covered by at least one base station that is managed by the RNC, and/or determine VAM matrix information of a cell covered by at least one base station that is managed by another RNC.

With reference to the first possible implementation of the third aspect, in a second possible implementation, the processor is specifically configured to determine the VAM matrix information of the cell covered by the at least one base station that is managed by the RNC according to the following step: determining the VAM matrix information that is of the cell and that is respectively sent from the at least one base station to the RNC; orrespectively configuring the VAM matrix information for the cell covered by the at least one base station that is managed by the RNC.

With reference to the second possible implementation of the third aspect, in a third possible implementation, the transmitter is further configured to after the processor respectively configures the VAM matrix information for the cell covered by the at least one base station that is managed by the RNC, send the VAM matrix information configured for each cell to a base station to which the cell belongs.

With reference to the first possible implementation of the third aspect, in a fourth possible implementation, the processor is specifically configured to determine the VAM matrix information of the cell covered by the at least one base station that is managed by the another RNC according to the following step determining the VAM matrix information that is of the cell and that is sent from the another RNC.

With reference to any one of the third aspect, or the first to the fourth possible implementations of the third aspect, in a fifth possible implementation, if the device is a radio network controller (RNC), the transmitter is specifically configured to inform the UE of the VAM matrix information of the at least one cell by using radio resource control (RRC) signaling.

With reference to the third aspect, in a sixth possible implementation, if the device is a base station, the processor is specifically configured to: obtain the VAM matrix information that is of the at least one cell and that is configured by a radio network controller (RNC); or configure VAM matrix information for at least one cell covered by the base station, and obtain VAM matrix information that is of at least one cell and that is configured by another base station.

With reference to the third aspect, or the sixth possible implementation of the third aspect, in a seventh possible implementation, if the device is a base station, the transmitter is specifically configured to inform the user equipment (UE) of the VAM matrix information of the at least one cell by using physical layer signaling, where the physical layer signaling includes broadcast signaling or dedicated control signaling.

With reference to the seventh possible implementation of the third aspect, in an eighth possible implementation, if the base station is a serving base station, the at least one cell includes a serving cell and a neighboring cell of the UE; or if the base station is a neighboring base station, the at least one cell includes at least one cell covered by the neighboring base station.

With reference to any one of the third aspect, or the first to the eighth possible implementations of the third aspect, in a ninth possible implementation, the VAM matrix information of each cell includes: information for indicating a VAM matrix used by the cell; or information for indicating a precoding codebook group used by the cell, where the precoding codebook group is a codebook set generated based on a VAM matrix and a precoding matrix set that can be used, and is used to demodulate a MIMO signal.

With reference to the ninth possible implementation of the third aspect, in a tenth possible implementation, the information for indicating a VAM matrix used by the cell includes one or more of the following information: identification information for indicating the VAM matrix; identification information for indicating a phase used by the VAM matrix; or identification information of the cell.

With reference to the ninth possible implementation of the third aspect, in an eleventh possible implementation, the information for indicating a precoding codebook group used by the cell includes one or more of the following information: identification information of the precoding codebook group; information about the VAM matrix used to generate the precoding codebook group; or identification information of the cell.

According to a fourth aspect, an information transmission device is provided, including:

> a receiver, configured to: receive virtual antenna mapping (VAM) matrix information that is of at least one cell and that is sent from a network-side device, and transmit the received VAM matrix information of the at least one cell to a processor; and
> the processor, configured to demodulate, based on VAM matrix information of any one of the at least one cell, a multiple-input multiple-output (MIMO) signal received from the cell.

With reference to the fourth aspect, in a first possible implementation, if the device is a radio network controller (RNC), the receiver is specifically configured to receive the VAM matrix information that is of the at least one cell and that is sent from the RNC by using radio resource control (RRC) signaling.

With reference to the fourth aspect, in a second possible implementation, if the device is a base station, the receiver is specifically configured to receive the VAM matrix information that is of the at least one cell and that is sent from the base station by using physical layer signaling, where the physical layer signaling includes broadcast signaling or dedicated control signaling.

With reference to the second possible implementation of the fourth aspect, in a third possible implementation, if the base station is a serving base station, the at least one cell includes a serving cell and a neighboring cell of the UE; or if the base station is a neighboring base station, the at least one cell includes at least one cell covered by the neighboring base station.

With reference to the fourth aspect, or the second or the third possible implementation of the fourth aspect, in a fourth possible implementation, the VAM matrix information of each cell includes: information for indicating a VAM matrix used by the cell; or information for indicating a precoding codebook group used by the cell, where the precoding codebook group is a codebook set generated based on a VAM matrix and a precoding matrix set that can be used, and is used to demodulate a MIMO signal.

With reference to the fourth possible implementation of the fourth aspect, in a fifth possible implementation, the information for indicating a VAM matrix used by the cell includes one or more of the following information: identification information for indicating the VAM matrix; identification information for indicating a phase used by the VAM matrix; or identification information of the cell.

With reference to the fourth possible implementation of the fourth aspect, in a sixth possible implementation, the information for indicating a precoding codebook group used by the cell includes one or more of the following information: identification information of the precoding codebook group; information about the VAM matrix used to generate the precoding codebook group; or identification information of the cell.

According to a fifth aspect, an information transmission method is provided, including:

> determining, by a network-side device, virtual antenna mapping (VAM) matrix information of at least one cell sending a multiple-input multiple-output (MIMO) signal; and
> informing, by the network-side device, user equipment (UE) of the VAM matrix information of the at least one cell.

With reference to the fifth aspect, in a first possible implementation, if the network-side device is a radio network controller (RNC), the determining, by the RNC, VAM matrix information of at least one cell sending a MIMO signal includes: determining, by the RNC, VAM matrix information of a cell covered by at least one base station that is managed by the RNC, and/or determining, by the RNC, VAM matrix information of a cell covered by at least one base station that is managed by another RNC.

With reference to the first possible implementation of the fifth aspect, in a second possible implementation, the determining, by the RNC, VAM matrix information of a cell covered by at least one base station that is managed by the RNC includes: receiving, by the RNC, the VAM matrix information that is of the cell and that is respectively sent from the at least one base station; or respectively configuring, by the RNC, the VAM matrix information for the cell covered by the at least one base station that is managed by the RNC.

With reference to the second possible implementation of the fifth aspect, in a third possible implementation, after the respectively configuring, by the RNC, the VAM matrix information for the cell covered by the at least one base station that is managed by the RNC, the method further includes sending, by the RNC, the VAM matrix information configured for each cell to a base station to which the cell belongs.

With reference to the first possible implementation of the fifth aspect, in a fourth possible implementation, the determining, by the RNC, VAM matrix information of a cell covered by at least one base station that is managed by another RNC includes receiving, by the RNC, the VAM matrix information that is of the cell and that is sent from the another RNC.

With reference to any one of the fifth aspect, or the first to the fourth possible implementations of the fifth aspect, in a fifth possible implementation, if the network-side device is a radio network controller (RNC), the informing, by the RNC, UE of the VAM matrix information of the at least one cell includes informing, by the RNC, the UE of the VAM matrix information of the at least one cell by using radio resource control (RRC) signaling.

With reference to the fifth aspect, in a sixth possible implementation, if the network-side device is a base station, the determining, by the base station, VAM matrix information of at least one cell sending a MIMO signal includes obtaining, by the base station, the VAM matrix information that is of the at least one cell and that is configured by a radio network controller (RNC); or configuring, by the base station, VAM matrix information for at least one cell covered by the base station, and obtaining VAM matrix information that is of at least one cell and that is configured by another base station.

With reference to the fifth aspect, or the sixth possible implementation of the fifth aspect, in a seventh possible implementation, if the network-side device is a base station, the informing, by the base station, UE of the VAM matrix information of the at least one cell includes informing, by the base station, the user equipment (UE) of the VAM matrix information of the at least one cell by using physical layer signaling, where the physical layer signaling includes broadcast signaling or dedicated control signaling.

With reference to the seventh possible implementation of the fifth aspect, in an eighth possible implementation, if the base station is a serving base station, the at least one cell includes a serving cell and a neighboring cell of the UE; or if the base station is a neighboring base station, the at least one cell includes at least one cell covered by the neighboring base station.

With reference to any one of the fifth aspect, or the first to the eighth possible implementations of the fifth aspect, in a ninth possible implementation, the VAM matrix information of each cell includes: information for indicating a VAM matrix used by the cell; or information for indicating a precoding codebook group used by the cell, where the precoding codebook group is a codebook set generated based on a VAM matrix and a precoding matrix set that can be used, and is used to demodulate a MIMO signal.

With reference to the ninth possible implementation of the fifth aspect, in a tenth possible implementation, the information for indicating a VAM matrix used by the cell includes one or more of the following information: identification information for indicating the VAM matrix; identification information for indicating a phase used by the VAM matrix; or identification information of the cell.

With reference to the ninth possible implementation of the fifth aspect, in an eleventh possible implementation, the information for indicating a precoding codebook group used by the cell includes one or more of the following information: identification information of the precoding codebook group; information about the VAM matrix used to generate the precoding codebook group; or identification information of the cell.

According to a sixth aspect, an information transmission method is provided, including:

> receiving, by user equipment (UE), virtual antenna mapping (VAM) matrix information that is of at least one cell and that is sent from a network-side device; and
> demodulating, by the UE, based on VAM matrix information of any one of the at least one cell, a multiple-input multiple-output (MIMO) signal received from the cell.

With reference to the sixth aspect, in a first possible implementation, if the network-side device is a radio network controller (RNC), the receiving, by UE, VAM matrix information that is of at least one cell and that is sent from the RNC includes receiving, by the UE, the VAM matrix information that is of the at least one cell and that is sent from the RNC by using radio resource control (RRC) signaling.

With reference to the sixth aspect, in a second possible implementation, if the network-side device is a base station, the receiving, by UE, VAM matrix information that is of at least one cell and that is sent from the base station includes receiving, by the UE, the VAM matrix information that is of the at least one cell and that is sent from the base station by using physical layer signaling, where the physical layer signaling includes broadcast signaling or dedicated control signaling.

With reference to the second possible implementation of the sixth aspect, in a third possible implementation, if the base station is a serving base station, the at least one cell includes a serving cell and a neighboring cell of the UE; or if the base station is a neighboring base station, the at least one cell includes at least one cell covered by the neighboring base station.

With reference to the sixth aspect, or the second or the third possible implementation of the sixth aspect, in a fourth possible implementation, the VAM matrix information of each cell includes: information for indicating a VAM matrix used by the cell; or information for indicating a precoding codebook group used by the cell, where the precoding codebook group is a codebook set generated based on a VAM matrix and a precoding matrix set that can be used, and is used to demodulate a MIMO signal.

With reference to the fourth possible implementation of the sixth aspect, in a fifth possible implementation, the information for indicating a VAM matrix used by the cell includes one or more of the following information: identification information for indicating the VAM matrix; identification information for indicating a phase used by the VAM matrix; or identification information of the cell.

With reference to the fourth possible implementation of the sixth aspect, in a sixth possible implementation, the information for indicating a precoding codebook group used by the cell includes one or more of the following information: identification information of the precoding codebook group; information about the VAM matrix used to generate the precoding codebook group; or identification information of the cell.

According to the method, apparatus, or device according to any one of the foregoing aspects, the network-side device may inform the UE of the determined VAM matrix information of the at least one cell sending the MIMO signal, and the UE may demodulate, based on VAM matrix information of a cell, a multiple-input multiple-output (MIMO) signal received from the cell. It can be learned that, based on the foregoing method, apparatus, or device, when the at least one cell includes a serving cell, the UE may correctly demodulate a MIMO signal received from the serving cell, and when the at least one cell includes a neighboring cell, the UE may cancel or suppress interference from the neighboring cell by demodulating a MIMO signal from the neighboring cell.

BRIEF DESCRIPTION OF DRAWINGS

FIG. 1 shows a first MIMO signal transmission manner;
FIG. 2 shows a second MIMO signal transmission manner;
FIG. 3 is a schematic structural diagram of an information transmission system 30 according to an embodiment of the present invention;
FIG. 4 is a schematic structural diagram of an information transmission apparatus according to an embodiment of the present invention;
FIG. 5 is a schematic structural diagram of another information transmission apparatus according to an embodiment of the present invention;
FIG. 6 is a schematic structural diagram of an information transmission device according to an embodiment of the present invention;
FIG. 7 is a schematic structural diagram of another information transmission device according to an embodiment of the present invention;
FIG. 8 is a flowchart of an information transmission method according to an embodiment of the present invention;
FIG. 9 is a flowchart of an information transmission method according to another embodiment of the present invention;
FIG. 10 is a flowchart of an information transmission method according to still another embodiment of the present invention;
FIG. 11 is a flowchart of an information transmission method according to yet another embodiment of the present invention; and
FIG. 12 is a flowchart of an information transmission method according to still yet another embodiment of the present invention.

DESCRIPTION OF EMBODIMENTS

To make the objectives, technical solutions, and advantages of the present invention clearer, the following further describes the present invention in detail with reference to the accompanying drawings. Apparently, the described embodiments are merely some but not all of the embodiments of the present invention. All other embodiments obtained by a person of ordinary skill in the art based on the embodiments of the present invention without creative efforts shall fall within the protection scope of the present invention.

The technical solutions described in the embodiments of the present invention may be applied to a wideband code division multiple access (Wideband Code Division Multiple Access, WCDMA) communications system or a high speed packet access (High-Speed Packet Access, HSPA) communications system.

In the embodiments of the present invention, various aspects of the technical solutions are described from the perspective of user equipment and/or a network-side device.

The user equipment may be a wireless terminal or a wired terminal. The wireless terminal may refer to a device that provides a user with voice and/or data connectivity, a handheld device with a radio connection function, or another processing device connected to a radio modem. The wireless terminal may communicate with one or more core networks through a radio access network (such as RAN, Radio Access Network). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile device, which exchanges language and/or data with the radio access network. For example, it may be a device such as a personal communication service (PCS, Personal Communication Service) phone, a cordless telephone set, a Session Initiation Protocol (SIP) phone, a wireless local loop (WLL, Wireless Local Loop) station, or a personal digital assistant (PDA, Personal Digital Assistant). The wireless terminal may also be referred to as a system, a subscriber unit (Subscriber Unit), a subscriber station (Subscriber Station), a mobile station (Mobile Station), a mobile terminal (Mobile), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

The network-side device in the embodiments of the present invention may be a radio network processor (RNC, Radio Network Controller) or a base station, and is further described below.

The term "and/or" in the embodiments of the present invention describes only an association relationship for describing associated objects and represents that three relationships may exist. For example, A and/or B may represent the following three cases: Only A exists, both A and B exist, and only B exists.

In the embodiments of the present invention, the network-side device determines VAM matrix information of at least one cell sending a MIMO signal and informs UE of the VAM matrix information of the at least one cell. The UE may demodulate, based on VAM matrix information of any cell, a multiple-input multiple-output (MIMO) signal received from the cell. According to the embodiments of the present invention, UE may correctly demodulate a MIMO signal received from a serving cell, and may further cancel or suppress interference from a neighboring cell by demodulating a MIMO signal from the neighboring cell.

The following further describes the embodiments of the present invention in detail with reference to the accompanying drawings of this specification.

An information transmission system, an information transmission apparatus, an information transmission device, and an information transmission method provided in the following embodiments of the present invention are based on a same invention concept, and principles used for resolving problems in the system, the apparatus, and the device are similar to a principle used for resolving problems in the information transmission method in the embodiments of the present invention. Therefore, for implementation of the system, the apparatus, and the device, refer to implementation of the method, and repetitions are not described herein.

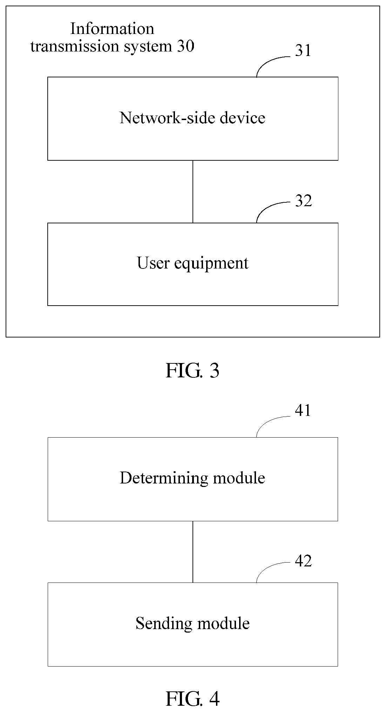

As shown in FIG. 3, FIG. 3 is a schematic structural diagram of an information transmission system 30 according to an embodiment of the present invention. The information transmission system 30 includes: a network-side device 31, configured to: determine virtual antenna mapping (VAM) matrix information of at least one cell sending a multiple-input multiple-output (MIMO) signal, and inform user equipment (UE) of the VAM matrix information of the at least one cell; and the user equipment (UE) 32, configured to: receive the virtual antenna mapping (VAM) matrix information that is of at least one cell and that is sent from the network-side device, and demodulate, based on VAM matrix information of any one of the at least one cell, a multiple-input multiple-output (MIMO) signal received from the cell.

As shown in FIG. 4, an embodiment of the present invention further provides an information transmission apparatus. The information transmission apparatus may be deployed in a radio network controller (RNC), a base station, or a network device controlled by the RNC or the base station. The information transmission apparatus includes: a determining module 41, configured to: determine virtual antenna mapping (VAM) matrix information of at least one cell sending a multiple-input multiple-output (MIMO) signal, and transmit the determined VAM matrix information of the at least one cell to a sending module; and the sending module 42, configured to inform user equipment (UE) of the VAM matrix information that is of the at least one cell and that is determined by the determining module 41.

Optionally, if the apparatus is in a radio network controller (RNC), the determining module 41 is specifically configured to determine VAM matrix information of a cell covered by at least one base station that is managed by the RNC, and/or determine VAM matrix information of a cell covered by at least one base station that is managed by another RNC.

Optionally, the determining module 41 is specifically configured to determine the VAM matrix information of the cell covered by the at least one base station that is managed by the RNC according to the following step: receiving the VAM matrix information that is of the cell and that is respectively sent from the at least one base station; or respectively configuring the VAM matrix information for the cell covered by the at least one base station that is managed by the RNC.

Optionally, the sending module 42 is further configured to after the determining module respectively configures the VAM matrix information for the cell covered by the at least one base station that is managed by the RNC, send the VAM matrix information configured for each cell to a base station to which the cell belongs.

Optionally, the determining module 41 is specifically configured to determine the VAM matrix information of the cell covered by the at least one base station that is managed by the another RNC according to the following step: receiving the VAM matrix information that is of the cell and that is sent from the another RNC.

Optionally, if the apparatus is in a radio network controller (RNC), the sending module 42 is specifically configured to inform the UE of the VAM matrix information of the at least one cell by using radio resource control (RRC) signaling.

Optionally, if the apparatus is in a base station, the determining module 41 is specifically configured to: obtain the VAM matrix information that is of the at least one cell and that is configured by a radio network controller (RNC); or configure VAM matrix information for at least one cell covered by the base station, and obtain VAM matrix information that is of at least one cell and that is configured by another base station.

Optionally, if the apparatus is in a base station, the sending module 42 is specifically configured to inform the user equipment (UE) of the VAM matrix information of the at least one cell by using physical layer signaling, where the physical layer signaling includes broadcast signaling or dedicated control signaling.

Optionally, if the base station is a serving base station, the at least one cell includes a serving cell and a neighboring cell of the UE; or if the base station is a neighboring base station, the at least one cell includes at least one cell covered by the neighboring base station.

Optionally, the VAM matrix information of each cell includes: information for indicating a VAM matrix used by the cell; or information for indicating a precoding codebook group used by the cell, where the precoding codebook group is a codebook set generated based on a VAM matrix and a precoding matrix set that can be used, and is used to demodulate a MIMO signal.

Optionally, the information for indicating a VAM matrix used by the cell includes one or more of the following information: identification information for indicating the VAM matrix; identification information for indicating a phase used by the VAM matrix; or identification information of the cell.

Optionally, the information for indicating a precoding codebook group used by the cell includes one or more of the following information: identification information of the precoding codebook group; information about the VAM matrix used to generate the precoding codebook group; or identification information of the cell.

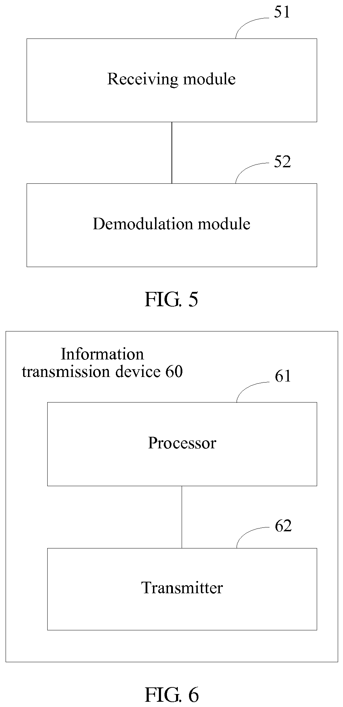

Corresponding to the information transmission apparatus in FIG. 4, as shown in FIG. 5, an embodiment of the present invention further provides another information transmission apparatus. The information transmission apparatus may be deployed in UE and includes: a receiving module 51, configured to: receive virtual antenna mapping (VAM) matrix information that is of at least one cell and that is sent from a network-side device, and transmit the received VAM matrix information of the at least one cell to a demodulation module; and the demodulation module 52, configured to demodulate, based on VAM matrix information of any one of the at least one cell, a multiple-input multiple-output (MIMO) signal received from the cell.

Optionally, if the apparatus is in a radio network controller (RNC), the receiving module 51 is specifically configured to receive the VAM matrix information that is of the at least one cell and that is sent from the RNC by using radio resource control (RRC) signaling.

Optionally, if the apparatus is in a base station, the receiving module 51 is specifically configured to receive the VAM matrix information that is of the at least one cell and that is sent from the base station by using physical layer signaling, where the physical layer signaling includes broadcast signaling or dedicated control signaling.

Optionally, if the base station is a serving base station, the at least one cell includes a serving cell and a neighboring cell of the UE; or if the base station is a neighboring base station, the at least one cell includes at least one cell covered by the neighboring base station.

Optionally, the VAM matrix information of each cell includes: information for indicating a VAM matrix used by the cell; or information for indicating a precoding codebook group used by the cell, where the precoding codebook group is a codebook set generated based on a VAM matrix and a precoding matrix set that can be used, and is used to demodulate a MIMO signal.

Optionally, the information for indicating a VAM matrix used by the cell includes one or more of the following information: identification information for indicating the VAM matrix; identification information for indicating a phase used by the VAM matrix; or identification information of the cell.

Optionally, the information for indicating a precoding codebook group used by the cell includes one or more of the following information: identification information of the precoding codebook group; information about the VAM matrix used to generate the precoding codebook group; or identification information of the cell.

As shown in FIG. 6, FIG. 6 shows an information transmission device 60 according to an embodiment of the present invention. The device may be specifically a radio network controller (RNC) or a base station, and includes: a processor 61, configured to: determine virtual antenna mapping (VAM) matrix information of at least one cell sending a multiple-input multiple-output (MIMO) signal, and transmit the determined VAM matrix information of the at least one cell to a transmitter; and the transmitter 62, configured to inform user equipment (UE) of the VAM matrix information that is of the at least one cell and that is determined by the processor 61.

Optionally, if the device is a radio network controller (RNC), the processor 61 is specifically configured to determine VAM matrix information of a cell covered by at least one base station that is managed by the RNC, and/or determine VAM matrix information of a cell covered by at least one base station that is managed by another RNC.

Optionally, the processor 61 is specifically configured to determine the VAM matrix information of the cell covered by the at least one base station that is managed by the RNC according to the following step: determining the VAM matrix information that is of the cell and that is respectively sent from the at least one base station to the RNC; or respectively configuring the VAM matrix information for the cell covered by the at least one base station that is managed by the RNC.

Optionally, the transmitter 62 is further configured to, after the processor 61 respectively configures the VAM matrix information for the cell covered by the at least one base station that is managed by the RNC, send the VAM matrix information configured for each cell to a base station to which the cell belongs.

Optionally, the processor 61 is specifically configured to determine the VAM matrix information of the cell covered by the at least one base station that is managed by the another RNC according to the following step: determining the VAM matrix information that is of the cell and that is sent from the another RNC.

Optionally, if the device is a radio network controller (RNC), the transmitter 62 is specifically configured to inform the UE of the VAM matrix information of the at least one cell by using radio resource control (RRC) signaling.

Optionally, if the device is a base station, the processor 61 is specifically configured to obtain the VAM matrix information that is of the at least one cell and that is configured by a radio network controller (RNC); or configure VAM matrix information for at least one cell covered by the base station, and obtain VAM matrix information that is of at least one cell and that is configured by another base station.

Optionally, if the device is a base station, the transmitter 62 is specifically configured to inform the user equipment (UE) of the VAM matrix information of the at least one cell by using physical layer signaling, where the physical layer signaling includes broadcast signaling or dedicated control signaling.

Optionally, if the base station is a serving base station, the at least one cell includes a serving cell and a neighboring cell of the UE; or if the base station is a neighboring base station, the at least one cell includes at least one cell covered by the neighboring base station.

Optionally, the VAM matrix information of each cell includes: information for indicating a VAM matrix used by the cell; or information for indicating a precoding codebook group used by the cell, where the precoding codebook group is a codebook set generated based on a VAM matrix and a precoding matrix set that can be used, and is used to demodulate a MIMO signal.

Optionally, the information for indicating a VAM matrix used by the cell includes one or more of the following information: identification information for indicating the VAM matrix; identification information for indicating a phase used by the VAM matrix; or identification information of the cell.

Optionally, the information for indicating a precoding codebook group used by the cell includes one or more of the following information: identification information of the precoding codebook group; information about the VAM matrix used to generate the precoding codebook group; or identification information of the cell.

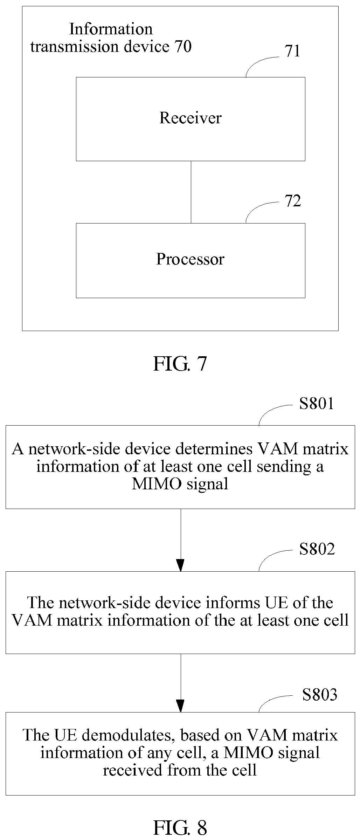

As shown in FIG. 7, FIG. 7 shows another information transmission device 70 according to an embodiment of the present invention. The device may be specifically UE, and includes: a receiver 71 and a processor 72.

The receiver 71 is configured to receive virtual antenna mapping (VAM) matrix information that is of at least one cell and that is sent from a network-side device, and transmit the received VAM matrix information of the at least one cell to a processor 72; and

The processor 72 is configured to demodulate, based on VAM matrix information of any one of the at least one cell, a multiple-input multiple-output (MIMO) signal received from the cell.

Optionally, if the device is a radio network controller (RNC), the receiver 71 is specifically configured to receive the VAM matrix information that is of the at least one cell and that is sent from the RNC by using radio resource control (RRC) signaling.

Optionally, if the device is a base station, the receiver 71 is specifically configured to receive the VAM matrix information that is of the at least one cell and that is sent from the base station by using physical layer signaling, where the physical layer signaling includes broadcast signaling or dedicated control signaling.

Optionally, if the base station is a serving base station, the at least one cell includes a serving cell and a neighboring cell of the UE; or if the base station is a neighboring base station, the at least one cell includes at least one cell covered by the neighboring base station.

Optionally, the VAM matrix information of each cell includes: information for indicating a VAM matrix used by the cell; or information for indicating a precoding codebook group used by the cell, where the precoding codebook group is a codebook set generated based on a VAM matrix and a precoding matrix set that can be used, and is used to demodulate a MIMO signal.

Optionally, the information for indicating a VAM matrix used by the cell includes one or more of the following information: identification information for indicating the VAM matrix; identification information for indicating a phase used by the VAM matrix; or identification information of the cell.

Optionally, the information for indicating a precoding codebook group used by the cell includes one or more of the following information: identification information of the precoding codebook group; information about the VAM matrix used to generate the precoding codebook group; or identification information of the cell.

As shown in FIG. 8, FIG. 8 is a flowchart of an information transmission method according to an embodiment of the present invention. The information transmission method includes the following steps.

S801: A network-side device determines VAM matrix information of at least one cell sending a MIMO signal.

The at least one cell herein may include a serving cell and/or a neighboring cell of UE.

The network-side device herein may be a radio network controller (RNC) or a base station.

Based on different MIMO transmission manners, the VAM matrix information herein may be presented in two forms. The first form is information for directly indicating a VAM matrix used by the cell, and the other form is information for indicating a precoding codebook group used by the cell, where the precoding codebook group is a codebook set generated based on a VAM matrix and a precoding matrix set that can be used, and is used to demodulate a MIMO signal. The indication of the VAM matrix information is described in detail in the following Embodiment 2, and details are not described herein.

S802: The network-side device informs UE of the VAM matrix information of the at least one cell.

When the network-side device herein is a radio network controller (RNC), the RNC may inform the UE of the VAM matrix information of the at least one cell by using radio resource control (Radio Resource Control, RRC) signaling. When the network-side device is a base station, the base station informs the UE of the VAM matrix information by using physical layer signaling, where the physical layer signaling includes broadcast signaling or dedicated control signaling.

S803: The UE demodulates, based on VAM matrix information of any cell, a MIMO signal received from the cell.

If the VAM matrix information herein indicates a specific VAM matrix, the UE may estimate a channel matrix based on the VAM matrix and demodulate a data signal based on the estimated channel matrix. If the VAM matrix information indicates a precoding codebook group, a data signal may be demodulated based on the precoding codebook group. For details, refer to descriptions in the following Embodiment 2.

A specific implementation process of this embodiment of the present invention is described below by using an example in which the network-side device is a radio network controller (RNC).

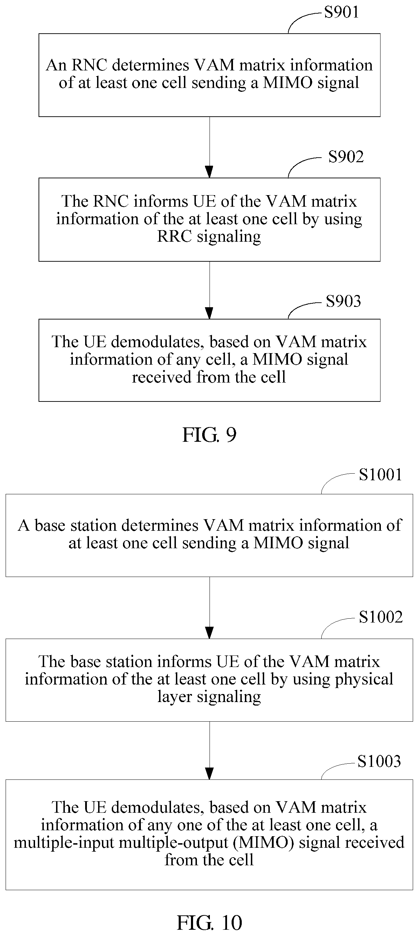

As shown in FIG. 9, FIG. 9 is a flowchart of an information transmission method according to another embodiment of the present invention. The information transmission method includes the following steps.

S901: A radio network controller (RNC) determines VAM matrix information of at least one cell sending a MIMO signal.

That a radio network controller (RNC) determines VAM matrix information of at least one cell sending a MIMO signal may include one or both of the following two cases.

Case 1: The RNC determines VAM matrix information of a cell covered by at least one base station (NodeB) that is managed by the RNC.

In this case, the RNC may determine VAM matrix information of cells covered by some or all base stations that are managed by the RNC. In addition, the RNC may determine VAM matrix information of one or more cells (at least one cell) covered by each of the at least one base station that is managed by the RNC.

During specific implementation, the RNC may determine, in two manners, the VAM matrix information of the cell covered by the at least one base station that is managed by the RNC, and the two manners are respectively as follows.

Manner 1: The RNC receives the VAM matrix information that is of the cell and that is respectively sent from the at least one base station.

In this manner, a base station configures VAM matrix information of a cell covered by the base station and informs the RNC of the VAM matrix information.

Manner 2: The RNC respectively configures the VAM matrix information for the cell covered by the at least one base station that is managed by the RNC.

In this manner, the RNC respectively configures the VAM matrix information for the at least one cell covered by each of some or all base stations that are managed by the RNC.

During specific implementation, after the RNC configures the VAM matrix information for the cell, the RNC informs a base station to which the cell belongs of the VAM matrix information of the cell, so that the cell may obtain the VAM matrix information and perform MIMO transmission with UE by using the VAM matrix information.

Case 2: The RNC determines VAM matrix information of a cell covered by at least one base station that is managed by another RNC.

During specific implementation, the RNC may receive, by interacting with the another RNC, the VAM matrix information that is sent from the another RNC and that is of the cell covered by the base station that is managed by the another RNC.

S902: The RNC informs UE of the VAM matrix information of the at least one cell by using RRC signaling.

In this step, the RNC informs the UE of the determined VAM matrix information of the at least one cell by using the RRC signaling, so that the UE demodulates the received MIMO signal by using the VAM matrix information.

S903: The UE demodulates, based on VAM matrix information of any cell, a multiple-input multiple-output (MIMO) signal received from the cell.

During specific implementation, the UE may demodulate, by using VAM matrix information of a serving cell, a MIMO signal received from the serving cell. The UE may demodulate, by using VAM matrix information of a neighboring cell, a MIMO signal from the neighboring cell, so as to cancel or suppress interference from the neighboring cell.

Based on different MIMO transmission manners, the VAM matrix information in S901 to S903 may be presented in two manners.

Manner 1. Information for directly indicating a VAM matrix used by the cell.

The information for indicating a VAM matrix used by the cell may include one or more of the following information: identification information for indicating the VAM matrix; identification information for indicating a phase used by the VAM matrix; or identification information of the cell.

Among the foregoing information, the identification information of the cell is used to distinguish cells that correspond to different VAM matrices.

The identification information for indicating the VAM matrix may be specifically identification information that can be used for distinguishing different VAM matrices, such as sequence numbers of VAM matrices. For example, N VAM matrices {S1, S2, ..., Sn, ..., SN} may be pre-defined, and the UE may learn a specific VAM matrix provided that the UE is informed of a sequence number n of the VAM matrix.

The identification information for indicating a phase used by the VAM matrix may be identification information for distinguishing different phases, such as a sequence number of the phase used by the VAM matrix. A detailed description is as follows.

In a 2x2 MIMO (that is, dual-input dual-output) transmission mode, the VAM matrix may be expressed as:

$$S = \frac{1}{\sqrt{2}} \begin{bmatrix} 1 & e^{j\varphi} \\ e^{j\theta} & -e^{j(\theta+\varphi)} \end{bmatrix}$$

It can be learned that the VAM matrix S may be determined by using a first phase $\varphi$ and a second phase $\theta$.

During specific implementation, N phase combinations $\{\{\varphi_1, \theta_1\}\{\varphi_2, \theta_2\},...,\{\varphi_n, \theta_n\}...,\{\varphi_N, \theta_N\}\}$ may be defined. The RNC informs the UE of a sequence number n of a selected phase combination, so that the UE may determine $S_n$. Alternatively, K first phase sequence numbers $\{\varphi_1, \varphi_2,...,\varphi_{k...}, \varphi_K\}$ and J second phase sequence numbers $\{\theta_1, \theta_2,...,\theta_{j...}, \theta_J\}$ may defined. The RNC informs the UE of a selected first phase sequence number k and a selected second phase sequence number j, so that the UE may determine $S(\varphi_k, \theta_j)$.

That a MIMO signal is demodulated based on VAM matrix information is described below.

Assuming that a primary pilot signal is $P_0$, a secondary pilot signal is $P_1$, a data stream 1 signal is $x_1$, a data stream 2 signal is $x_2$, a VAM matrix is S, a matrix for precoding the data stream signals is B, where B is any matrix in a known precoding matrix group, and a channel matrix is H, received signals $y_1$ and $y_2$ that are on a UE side and that correspond to the transmitted primary pilot signal Po and secondary pilot signal $P_1$ may be expressed as:

$$\begin{bmatrix} y_1 \\ y_2 \end{bmatrix} = HS \begin{bmatrix} P_0 \\ P_1 \end{bmatrix} \quad (1)$$

It can be learned that the UE obtains HS based on the known received signals $y_1$ and $y_2$ and the known transmitted pilot signals $P_0$ and $P_1$. According to the foregoing solution described in this embodiment of the present invention, the UE may learn the VAM matrix S, thereby solving the channel matrix H.

Received signals z1 and z2 that are on the UE side and that correspond to the data streams $x_1$ and $x_2$ may be expressed as:

$$\begin{bmatrix} z_1 \\ z_2 \end{bmatrix} = HB \begin{bmatrix} x_1 \\ x_2 \end{bmatrix} \quad (2)$$

$$\begin{bmatrix} z_1 \\ z_2 \end{bmatrix} = HBx_1 \quad (3)$$

Formula (2) corresponds to two transmitted data stream signals, and formula (3) corresponds to one transmitted data stream signal. It can be learned that the UE may correctly demodulate the received signals z1 and z2 based on the solved channel matrix H and any matrix B of the known precoding matrix group.

Manner 2. Information for indicating a precoding codebook group used by the cell, where the precoding codebook group is a codebook set generated based on a VAM matrix and a precoding matrix set that can be used, and is used to demodulate a MIMO signal.

The VAM matrix information may include one or more of the following information: identification information of the precoding codebook group; information about the VAM matrix used to generate the precoding codebook group; or identification information of the cell.

In this manner, pilot signals are also transmitted in the manner shown in formula (1). Data signals are respectively precoded by using S⁻¹B and HS that can be estimated based on the pilot signals, as shown in the following formulas:

$$\begin{bmatrix} z_1 \\ z_2 \end{bmatrix} = HSS^{-1}B \begin{bmatrix} x_1 \\ x_2 \end{bmatrix} \quad (4)$$

$$\begin{bmatrix} z_1 \\ z_2 \end{bmatrix} = HSS^{-1}Bx_1 \quad (5)$$

Formula (4) corresponds to two transmitted data stream signals, and formula (5) corresponds to one transmitted data stream signal. It can be learned that the UE may estimate HS based on the pilot signals. According to the foregoing solution described in this embodiment of the present invention, the UE may learn the VAM matrix S, so that $S^{-1}B$ may be obtained. The UE may correctly model the received data signals based on $S^{-1}B$ and HS, thereby demodulating the received data signals.

In the foregoing formulas, $S^{-1}B$ is the precoding codebook group. During actual implementation, the RNC may inform the UE of a precoding codebook group $S^{-1}B$ used by a cell transmitting a MIMO signal. Each precoding codebook group is obtained by multiplying one $S^{-1}$ by a group of B.

During specific implementation, N precoding codebook groups $\{S_1^{-1}B, S_2^{-1}B, ..., S_n^{-1}B, ..., S_N^{-1}B\}$ may be pre-defined, and the UE may learn a specific $S_n^{-1}B$ provided that the RNC informs the UE of a sequence number n of the precoding codebook group. In addition, because B in the precoding codebook group is a matrix in a specified matrix group, the RNC may inform the UE of only information about the VAM matrix S. In this case, the informed information about the VAM matrix may include the foregoing described identification information for indicating the VAM matrix, identification information for indicating a phase used by the VAM matrix, or the like.

That the network-side device is a serving cell and that the network-side device is a neighboring cell are respectively used as an example for description in the following Embodiment 3 and Embodiment 4. Any part during specific implementation of Embodiment 3 and Embodiment 4 that is the same as that of Embodiment 2, such as a presentation manner and usage of VAM matrix information, is not described again.

As shown in FIG. 10, FIG. 10 is a flowchart of an information transmission method according to still another embodiment of the present invention. The information transmission method includes the following steps.

S1001: A base station determines VAM matrix information of at least one cell sending a MIMO signal.

The at least one cell herein includes a serving cell and/or at least one neighboring cell of UE.

Optionally, if the base station is a serving base station, the at least one cell may include a serving cell and a neighboring cell of the UE; or if the base station is a neighboring base station, the at least one cell may include at least one cell covered by the neighboring base station.

That is, the serving base station may send VAM matrix information of the serving cell of the UE to the UE, and may further send VAM matrix information of at least one neighboring cell of the UE to the UE. The at least one neighboring cell herein may be a cell covered by the serving base station, or may be a cell covered by a neighboring base station. In addition, the serving base station may specifically send the VAM matrix information of the at least one cell to the UE by using the serving cell of the UE.

The neighboring base station may send VAM matrix information of only at least one cell covered by the neighboring base station to the UE. Certainly, the neighboring base station may send VAM matrix information that is of a cell covered by another base station and that is obtained by the neighboring base station to the UE. Specifically, the neighboring base station may send the VAM matrix information of the at least one cell to the UE by using one or more cells (neighboring cells of the UE) covered by the neighboring base station.

During specific implementation, the base station may obtain the VAM matrix information that is of the at least one cell and that is configured by a radio network controller (RNC). In this manner, the RNC configures VAM matrix information of a cell covered by at least one base station that is managed by the RNC, and may further receive VAM matrix information, of a cell, that is configured by another RNC and that is sent from the another RNC. The RNC sends the VAM matrix information configured by the RNC and/or the VAM matrix information sent from the another RNC to the at least one base station managed by the RNC.

Alternatively, the base station configures VAM matrix information for at least one cell covered by the base station, and obtains VAM matrix information that is of at least one cell and that is configured by another base station.

The base station may obtain the VAM matrix information that is of the at least one cell and that is configured by the another base station in the following manner: obtaining VAM matrix information that is of at least one cell covered by another base station and that is sent from a radio network controller (RNC). During specific implementation, any base station may report VAM matrix information that is of the at least one cell and that is configured by the base station to a corresponding RNC. The RNC may send the VAM matrix information that is of the at least one cell and that is configured by the any base station to another base station managed by the RNC, or send the VAM matrix information that is of the at least one cell and that is configured by the any base station to another RNC, and the another RNC sends the VAM matrix information to a base station managed by the another RNC.

S1002: The base station informs UE of the VAM matrix information of the at least one cell by using physical layer signaling.

The physical layer signaling herein may include broadcast signaling or dedicated control signaling. For example, the UE is informed of the VAM matrix information of the at least one cell by using a high speed shared control channel (High Speed-Shared Control Channel, HS-SCCH).

S1003: The UE demodulates, based on VAM matrix information of any one of the at least one cell, a multiple-input multiple-output (MIMO) signal received from the cell.

Specifically, if the at least one cell includes a serving cell, the UE demodulates, based on VAM matrix information of the serving cell, a MIMO signal received from the serving cell, or if the at least one cell includes a neighboring cell, the UE demodulates, based on VAM matrix information of the neighboring cell, a MIMO signal received from the neighboring cell.

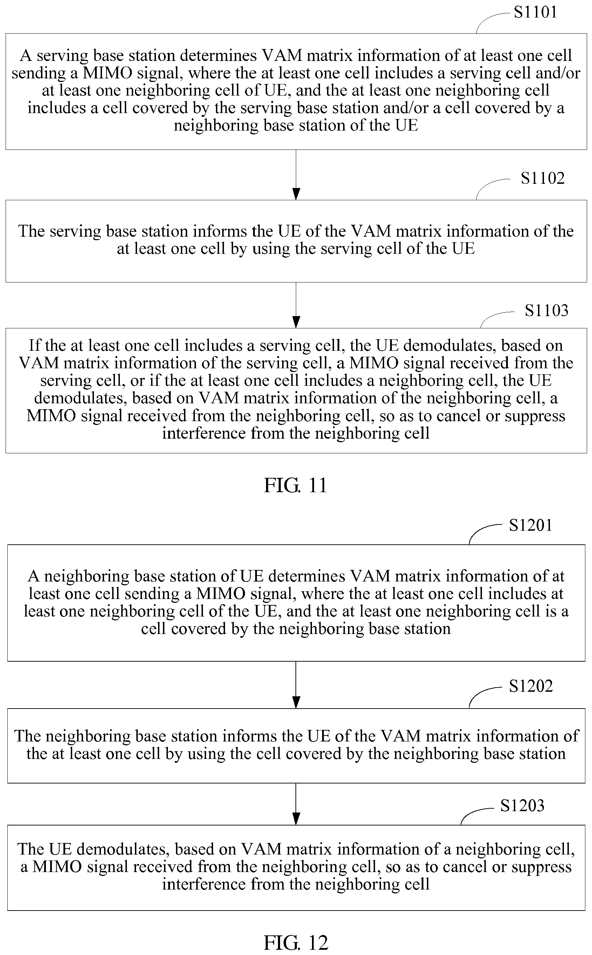

As shown in FIG. 11, FIG. 11 is a flowchart of an information transmission method according to yet another embodiment of the present invention. The information transmission method includes the following steps.

S1101: A serving base station determines VAM matrix information of at least one cell sending a MIMO signal, where the at least one cell includes a serving cell and/or at least one neighboring cell of UE, and the at least one neighboring cell includes a cell covered by the serving base station and/or a cell covered by a neighboring base station of the UE.

S1102: The serving base station informs the UE of the VAM matrix information of the at least one cell by using the serving cell of the UE.

S1103: If the at least one cell includes a serving cell, the UE demodulates, based on VAM matrix information of the serving cell, a MIMO signal received from the serving cell, or if the at least one cell includes a neighboring cell, the UE demodulates, based on VAM matrix information of the neighboring cell, a MIMO signal received from the neighboring cell, so as to cancel or suppress interference from the neighboring cell.

As shown in FIG. 12, FIG. 12 is a flowchart of an information transmission method according to still yet another embodiment of the present invention. The information transmission method includes the following steps.

S1201: A neighboring base station of UE determines VAM matrix information of at least one cell sending a MIMO signal, where the at least one cell includes at least one neighboring cell of the UE, and the at least one neighboring cell is a cell covered by the neighboring base station.

S1202: The neighboring base station informs the UE of the VAM matrix information of the at least one cell by using the cell covered by the neighboring base station.

The neighboring base station herein may inform the UE of the VAM matrix information of the at least one cell by using the cell covered by the neighboring base station, or may inform the UE of VAM matrix information of each of the at least one cell by using the cell.

S1203: The UE demodulates, based on VAM matrix information of a neighboring cell, a MIMO signal received from the neighboring cell, so as to cancel or suppress interference from the neighboring cell.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the apparatus (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, a person skilled in the art can make changes and modifications to these embodiments once they learn the basic inventive concept. Therefore, the following claims are intended to be construed as to cover the preferred embodiments and all changes and modifications falling within the scope of the present invention.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

**Claims**

1. An information transmission apparatus, wherein the apparatus comprises:

    a determining module, configured to: determine virtual antenna mapping (VAM) matrix information of at least one cell sending a multiple-input multiple-output (MIMO) signal, and transmit the determined VAM matrix information of the at least one cell to a sending module; and
    the sending module, configured to inform user equipment (UE) of the VAM matrix information that is of the at least one cell and that is determined by the determining module.

2. The apparatus according to claim 1, wherein if the apparatus is in a radio network controller (RNC), the determining module is specifically configured to:

    determine VAM matrix information of a cell covered by at least one base station that is managed by the RNC, and/or determine VAM matrix information of a cell covered by at least one base station that is managed by another RNC.

3. The apparatus according to claim 2, wherein the determining module is specifically configured to determine the VAM matrix information of the cell covered by the at least one base station that is managed by the RNC according to the following step:

    receiving the VAM matrix information that is of the cell and that is respectively sent by the at least one base station; or
    respectively configuring the VAM matrix information for the cell covered by the at least one base station that is managed by the RNC.

4. The apparatus according to claim 3, wherein the sending module is further configured to:

    after the determining module respectively configures the VAM matrix information for the cell covered by the at least one base station that is managed by the RNC, send the VAM matrix information configured for each cell to a base station to which the cell belongs.

5. The apparatus according to claim 2, wherein the determining module is specifically configured to determine the VAM matrix information of the cell covered by the at least one base station that is managed by the another RNC according to the following step:

    receiving the VAM matrix information that is of the cell and that is sent by the another RNC.

6. The apparatus according to claim 1, wherein if the apparatus is in a radio network controller (RNC), the sending module is specifically configured to:

    inform the UE of the VAM matrix information of the at least one cell by using radio resource control (RRC) signaling.

7. The apparatus according to claim 1, wherein if the apparatus is in a base station, the determining module is specifically configured to:

    obtain the VAM matrix information that is of the at least one cell and that is configured by a radio network controller (RNC); or
    configure VAM matrix information for at least one cell covered by the base station, and obtain VAM matrix information that is of at least one cell and that is configured by another base station.

8. The apparatus according to claim 1, wherein if the apparatus is in a base station, the sending module is specifically configured to:

    inform the user equipment (UE) of the VAM matrix information of the at least one cell by using physical layer signaling, wherein the physical layer signaling comprises broadcast signaling or dedicated control signaling.

9. The apparatus according to claim 8, wherein if the base station is a serving base station, the at least one cell comprises a serving cell and a neighboring cell of the UE; or if the base station is a neighboring base station, the at least one cell comprises at least one cell covered by the neighboring base station.

10. The apparatus according to any one of claims 1 to 9, wherein the VAM matrix information of each cell comprises:

    information for indicating a VAM matrix used by the cell; or
    information for indicating a precoding codebook group used by the cell, wherein the precoding codebook group is a codebook set generated based on a VAM matrix and a precoding matrix set that can be used, and is used to demodulate a MIMO signal.

11. The apparatus according to claim 10, wherein the information for indicating a VAM matrix used by the cell comprises one or more of the following information:

    identification information for indicating the VAM matrix;

identification information for indicating a phase used by the VAM matrix; or
identification information of the cell.

12. The apparatus according to claim 10, wherein the information for indicating a precoding codebook group used by the cell comprises one or more of the following information:

identification information of the precoding codebook group;
information about the VAM matrix used to generate the precoding codebook group; or
identification information of the cell.

13. An information transmission apparatus, wherein the apparatus comprises:

a receiving module, configured to: receive virtual antenna mapping (VAM) matrix information that is of at least one cell and that is sent by a network-side device, and transmit the received VAM matrix information of the at least one cell to a demodulation module; and
the demodulation module, configured to demodulate, based on VAM matrix information of any one of the at least one cell, a multiple-input multiple-output (MIMO) signal received from the cell.

14. The apparatus according to claim 13, wherein if the apparatus is in a radio network controller (RNC), the receiving module is specifically configured to:

receive the VAM matrix information that is of the at least one cell and that is sent by the RNC by using radio resource control (RRC) signaling.

15. The apparatus according to claim 13, wherein if the apparatus is in a base station, the receiving module is specifically configured to:

receive the VAM matrix information that is of the at least one cell and that is sent by the base station by using physical layer signaling, wherein the physical layer signaling comprises broadcast signaling or dedicated control signaling.

16. The apparatus according to claim 15, wherein if the base station is a serving base station, the at least one cell comprises a serving cell and a neighboring cell of the UE; or if the base station is a neighboring base station, the at least one cell comprises at least one cell covered by the neighboring base station.

17. The apparatus according to any one of claims 13 to 16, wherein the VAM matrix information of each cell comprises:

information for indicating a VAM matrix used by the cell; or
information for indicating a precoding codebook group used by the cell, wherein the precoding codebook group is a codebook set generated based on a VAM matrix and a precoding matrix set that can be used, and is used to demodulate a MIMO signal.

18. The apparatus according to claim 17, wherein the information for indicating a VAM matrix used by the cell comprises one or more of the following information:

identification information for indicating the VAM matrix;
identification information for indicating a phase used by the VAM matrix; or
identification information of the cell.

19. The apparatus according to claim 17, wherein the information for indicating a precoding codebook group used by the cell comprises one or more of the following information:

identification information of the precoding codebook group;
information about the VAM matrix used to generate the precoding codebook group; or
identification information of the cell.

20. An information transmission device, wherein the device comprises:

a processor, configured to determine virtual antenna mapping (VAM) matrix information of at least one cell sending a multiple-input multiple-output (MIMO) signal, and transmit the determined VAM matrix information of the at least one cell to a transmitter; and
the transmitter, configured to inform user equipment (UE) of the VAM matrix information that is of the at least one cell and that is determined by the processor.

21. The device according to claim 20, wherein if the device is a radio network controller (RNC), the processor is specifically configured to:

determine VAM matrix information of a cell covered by at least one base station that is managed by the RNC, and/or determine VAM matrix information of a cell covered by at least one base station that is managed by another RNC.

22. The device according to claim 21, wherein the processor is specifically configured to determine the VAM matrix information of the cell covered by the at least one base station that is managed by the RNC according to the following step:

> determining the VAM matrix information that is of the cell and that is respectively sent from the at least one base station to the RNC; or respectively configuring the VAM matrix information for the cell covered by the at least one base station that is managed by the RNC.

23. The device according to claim 22, wherein the transmitter is further configured to:

> after the processor respectively configures the VAM matrix information for the cell covered by the at least one base station that is managed by the RNC, send the VAM matrix information configured for each cell to a base station to which the cell belongs.

24. The device according to claim 21, wherein the processor is specifically configured to determine the VAM matrix information of the cell covered by the at least one base station that is managed by the another RNC according to the following step:

> determining the VAM matrix information that is of the cell and that is sent from the another RNC.

25. The device according to claim 20, wherein if the device is a radio network controller (RNC), the transmitter is specifically configured to:

> inform the UE of the VAM matrix information of the at least one cell by using radio resource control (RRC) signaling.

26. The device according to claim 20, wherein if the device is a base station, the processor is specifically configured to:

> obtain the VAM matrix information that is of the at least one cell and that is configured by a radio network controller (RNC); or configure VAM matrix information for at least one cell covered by the base station, and obtain VAM matrix information that is of at least one cell and that is configured by another base station.

27. The device according to claim 20, wherein if the device is a base station, the transmitter is specifically configured to:

> inform the user equipment (UE) of the VAM matrix information of the at least one cell by using physical layer signaling, wherein the physical layer signaling comprises broadcast signaling or dedicated control signaling.

28. The device according to claim 27, wherein if the base station is a serving base station, the at least one cell comprises a serving cell and a neighboring cell of the UE; or if the base station is a neighboring base station, the at least one cell comprises at least one cell covered by the neighboring base station.

29. The device according to any one of claims 20 to 28, wherein the VAM matrix information of each cell comprises:

> information for indicating a VAM matrix used by the cell; or information for indicating a precoding codebook group used by the cell, wherein the precoding codebook group is a codebook set generated based on a VAM matrix and a precoding matrix set that can be used, and is used to demodulate a MIMO signal.

30. The device according to claim 29, wherein the information for indicating a VAM matrix used by the cell comprises one or more of the following information:

> identification information for indicating the VAM matrix; identification information for indicating a phase used by the VAM matrix; or identification information of the cell.

31. The device according to claim 29, wherein the information for indicating a precoding codebook group used by the cell comprises one or more of the following information:

> identification information of the precoding codebook group; information about the VAM matrix used to generate the precoding codebook group; or identification information of the cell.

32. An information transmission device, wherein the device comprises:

> a receiver, configured to: receive virtual antenna mapping (VAM) matrix information that is of at least one cell and that is sent from a network-side device, and transmit the received VAM matrix information of the at least one cell to a processor; and the processor, configured to demodulate, based on VAM matrix information of any one of the at least one cell, a multiple-input multiple-output (MIMO) signal received from the cell.

33. The device according to claim 32, wherein if the device is a radio network controller (RNC), the receiver is specifically configured to:

> receive the VAM matrix information that is of the at least one cell and that is sent from the RNC by using radio resource control (RRC) signaling.

34. The device according to claim 32, wherein if the device is a base station, the receiver is specifically configured to:

> receive the VAM matrix information that is of the at least one cell and that is sent from the base station by using physical layer signaling, wherein the physical layer signaling comprises broadcast signaling or dedicated control signaling.

35. The device according to claim 34, wherein if the base station is a serving base station, the at least one cell comprises a serving cell and a neighboring cell of the UE; or if the base station is a neighboring base station, the at least one cell comprises at least one cell covered by the neighboring base station.

36. The device according to any one of claims 32 to 35, wherein the VAM matrix information of each cell comprises:

> information for indicating a VAM matrix used by the cell; or
> information for indicating a precoding codebook group used by the cell, wherein the precoding codebook group is a codebook set generated based on a VAM matrix and a precoding matrix set that can be used, and is used to demodulate a MIMO signal.

37. The device according to claim 36, wherein the information for indicating a VAM matrix used by the cell comprises one or more of the following information:

> identification information for indicating the VAM matrix;
> identification information for indicating a phase used by the VAM matrix; or
> identification information of the cell.

38. The device according to claim 36, wherein the information for indicating a precoding codebook group used by the cell comprises one or more of the following information:

> identification information of the precoding codebook group;
> information about the VAM matrix used to generate the precoding codebook group; or
> identification information of the cell.

39. An information transmission method, wherein the method comprises:

> determining, by a network-side device, virtual antenna mapping (VAM) matrix information of at least one cell sending a multiple-input multiple-output (MIMO) signal; and
> informing, by the network-side device, user equipment (UE) of the VAM matrix information of the at least one cell.

40. The method according to claim 39, wherein if the network-side device is a radio network controller (RNC), the determining, by the RNC, the VAM matrix information of the at least one cell sending a MIMO signal comprises:

> determining, by the RNC, VAM matrix information of a cell covered by at least one base station that is managed by the RNC, and/or determining, by the RNC, VAM matrix information of a cell covered by at least one base station that is managed by another RNC.

41. The method according to claim 40, wherein the determining, by the RNC, the VAM matrix information of the cell covered by the at least one base station that is managed by the RNC comprises:

> receiving, by the RNC, the VAM matrix information that is of the cell and that is respectively sent from the at least one base station; or
> respectively configuring, by the RNC, the VAM matrix information for the cell covered by the at least one base station that is managed by the RNC.

42. The method according to claim 41, wherein after the respectively configuring, by the RNC, the VAM matrix information for the cell covered by the at least one base station that is managed by the RNC, the method further comprises:

> sending, by the RNC, the VAM matrix information configured for each cell to a base station to which the cell belongs.

43. The method according to claim 40, wherein the determining, by the RNC, the VAM matrix information of the cell covered by the at least one base station that is managed by the another RNC comprises:

> receiving, by the RNC, the VAM matrix information that is of the cell and that is sent from the another RNC.

44. The method according to claim 39, wherein if the network-side device is a radio network controller (RNC), the informing, by the RNC, the UE of the VAM matrix information of the at least one cell comprises:

informing, by the RNC, the UE of the VAM matrix information of the at least one cell by using radio resource control (RRC) signaling.

45. The method according to claim 39, wherein if the network-side device is a base station, the determining, by the base station, the VAM matrix information of the at least one cell sending a MIMO signal comprises:

obtaining, by the base station, the VAM matrix information that is of the at least one cell and that is configured by a radio network controller (RNC); or
configuring, by the base station, VAM matrix information for at least one cell covered by the base station, and obtaining VAM matrix information that is of at least one cell and that is configured by another base station.

46. The method according to claim 39, wherein if the network-side device is a base station, the informing, by the base station, the UE of the VAM matrix information of the at least one cell comprises:

informing, by the base station, the user equipment (UE) of the VAM matrix information of the at least one cell by using physical layer signaling, wherein the physical layer signaling comprises broadcast signaling or dedicated control signaling.

47. The method according to claim 46, wherein if the base station is a serving base station, the at least one cell comprises a serving cell and a neighboring cell of the UE; or if the base station is a neighboring base station, the at least one cell comprises at least one cell covered by the neighboring base station.

48. The method according to any one of claims 39 to 47, wherein the VAM matrix information of each cell comprises:

information for indicating a VAM matrix used by the cell; or
information for indicating a precoding codebook group used by the cell, wherein the precoding codebook group is a codebook set generated based on a VAM matrix and a precoding matrix set that can be used, and is used to demodulate a MIMO signal.

49. The method according to claim 48, wherein the information for indicating a VAM matrix used by the cell comprises one or more of the following information:

identification information for indicating the VAM matrix;
identification information for indicating a phase used by the VAM matrix; or
identification information of the cell.

50. The method according to claim 48, wherein the information for indicating a precoding codebook group used by the cell comprises one or more of the following information:

identification information of the precoding codebook group;
information about the VAM matrix used to generate the precoding codebook group; or
identification information of the cell.

51. An information transmission method, wherein the method comprises:

receiving, by user equipment (UE), virtual antenna mapping (VAM) matrix information that is of at least one cell and that is sent from a network-side device; and
demodulating, by the UE, based on VAM matrix information of any one of the at least one cell, a multiple-input multiple-output (MIMO) signal received from the cell.

52. The method according to claim 51, wherein if the network-side device is a radio network controller (RNC), the receiving, by the UE, the VAM matrix information that is of the at least one cell and that is sent from the RNC comprises:

receiving, by the UE, the VAM matrix information that is of the at least one cell and that is sent from the RNC by using radio resource control (RRC) signaling.

53. The method according to claim 51, wherein if the network-side device is a base station, the receiving, by the UE, the VAM matrix information that is of the at least one cell and that is sent from the base station comprises:

receiving, by the UE, the VAM matrix information that is of the at least one cell and that is sent from the base station by using physical layer signaling, wherein the physical layer signaling comprises broadcast signaling or dedicated control signaling.

54. The method according to claim 53, wherein if the base station is a serving base station, the at least one cell comprises a serving cell and a neighboring cell of the UE; or if the base station is a neighboring base station, the at least one cell comprises at least one cell covered by the neighboring base station.

**55.** The method according to any one of claims 51 to 54, wherein the VAM matrix information of each cell comprises:

information for indicating a VAM matrix used by the cell; or
information for indicating a precoding codebook group used by the cell, wherein the precoding codebook group is a codebook set generated based on a VAM matrix and a precoding matrix set that can be used, and is used to demodulate a MIMO signal.

**56.** The method according to claim 55, wherein the information for indicating a VAM matrix used by the cell comprises one or more of the following information:

identification information for indicating the VAM matrix;
identification information for indicating a phase used by the VAM matrix; or
identification information of the cell.

**57.** The method according to claim 55, wherein the information for indicating a precoding codebook group used by the cell comprises one or more of the following information:

identification information of the precoding codebook group;
information about the VAM matrix used to generate the precoding codebook group; or
identification information of the cell.

FIG. 1

FIG. 2

Information transmission system 30

Network-side device — 31

User equipment — 32

FIG. 3

Determining module — 41

Sending module — 42

FIG. 4

51

Receiving module

52

Demodulation module

FIG. 5

Information
transmission device 60

61

Processor

62

Transmitter

FIG. 6

Information
transmission device 70
                                    71

Receiver

                                    72

Processor

## FIG. 7

S801

A network-side device determines VAM matrix
information of at least one cell sending a
MIMO signal

S802

The network-side device informs UE of the
VAM matrix information of the at least one cell

S803

The UE demodulates, based on VAM matrix
information of any cell, a MIMO signal
received from the cell

## FIG. 8

S901

An RNC determines VAM matrix information of at least one cell sending a MIMO signal

S902

The RNC informs UE of the VAM matrix information of the at least one cell by using RRC signaling

S903

The UE demodulates, based on VAM matrix information of any cell, a MIMO signal received from the cell

FIG. 9

S1001

A base station determines VAM matrix information of at least one cell sending a MIMO signal

S1002

The base station informs UE of the VAM matrix information of the at least one cell by using physical layer signaling

S1003

The UE demodulates, based on VAM matrix information of any one of the at least one cell, a multiple-input multiple-output (MIMO) signal received from the cell

FIG. 10

S1101

A serving base station determines VAM matrix information of at least one cell sending a MIMO signal, where the at least one cell includes a serving cell and/or at least one neighboring cell of UE, and the at least one neighboring cell includes a cell covered by the serving base station and/or a cell covered by a neighboring base station of the UE

S1102

The serving base station informs the UE of the VAM matrix information of the at least one cell by using the serving cell of the UE

S1103

If the at least one cell includes a serving cell, the UE demodulates, based on VAM matrix information of the serving cell, a MIMO signal received from the serving cell, or if the at least one cell includes a neighboring cell, the UE demodulates, based on VAM matrix information of the neighboring cell, a MIMO signal received from the neighboring cell, so as to cancel or suppress interference from the neighboring cell

FIG. 11

S1201

A neighboring base station of UE determines VAM matrix information of at least one cell sending a MIMO signal, where the at least one cell includes at least one neighboring cell of the UE, and the at least one neighboring cell is a cell covered by the neighboring base station

S1202

The neighboring base station informs the UE of the VAM matrix information of the at least one cell by using the cell covered by the neighboring base station

S1203

The UE demodulates, based on VAM matrix information of a neighboring cell, a MIMO signal received from the neighboring cell, so as to cancel or suppress interference from the neighboring cell

FIG. 12

# INTERNATIONAL SEARCH REPORT

| International application No. |
|---|
| **PCT/CN2015/088326** |

### A. CLASSIFICATION OF SUBJECT MATTER

H04B 7/04 (2006.01) i

According to International Patent Classification (IPC) or to both national classification and IPC

### B. FIELDS SEARCHED

Minimum documentation searched (classification system followed by classification symbols)

H04B; H04W; H04Q

Documentation searched other than minimum documentation to the extent that such documents are included in the fields searched

Electronic data base consulted during the international search (name of data base and, where practicable, search terms used)

CNPAT, CNKI, WPI, EPODOC: matrix, user equipment, multiple-input multiple-output, modulation, demodulation, channel, base station, RNC, RRC, MIMO, VAM, equipment, virtual antenna mapping, pilot channel, multiple input

### C. DOCUMENTS CONSIDERED TO BE RELEVANT

| Category* | Citation of document, with indication, where appropriate, of the relevant passages | Relevant to claim No. |
|---|---|---|
| X | WO 2013068135 A1 (NOKIA SIEMENS NETWORKS OY), 16 May 2013 (16.05.2013), claims 1-10, and description, pages 6-9 | 1-57 |
| A | WO 2012096609 A1 (TELEFONAKTIEBOLAGET L M ERICSSON PUBL), 19 July 2012 (19.07.2012), the whole document | 1-57 |
| A | CN 101567865 A (CHENGDU TD TECH LTD.), 28 October 2009 (28.10.2009), the whole document | 1-57 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 May 2016 (02.05.2016) | **24 May 2016 (24.05.2016)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**LI, Kai**<br><br>Telephone No.: (86-10) **62413120** |

Form PCT/ISA/210 (second sheet) (July 2009)

## INTERNATIONAL SEARCH REPORT
### Information on patent family members

| International application No. |
| --- |
| **PCT/CN2015/088326** |

| Patent Documents referred in the Report | Publication Date | Patent Family | Publication Date |
| --- | --- | --- | --- |
| WO 2013068135 A1 | 16 May 2013 | None | |
| WO 2012096609 A1 | 19 July 2012 | None | |
| CN 101567865 A | 28 October 2009 | None | |

Form PCT/ISA/210 (patent family annex) (July 2009)